# EUROPEAN PATENT SPECIFICATION

(11) **EP 1 336 340 B1**
(45) Date of publication and mention of the grant of the patent: **26.01.2005**
(21) Application number: 01997229.8
(22) Date of filing: 24.11.2001
(51) Int. Cl.: A23L 1/24

(54) **MAYONNAISE SAUCE AND PREPARATION METHOD THEREOF**
MAYONNAISESAUCE UND ZUBEREITUNGSVERFAHREN DAFÜR
SAUCE MAYONNAISE ET SON PROCEDE DE FABRICATION

(30) Priority: 24.11.2000 ES 200002821
(43) Date of publication of application: 20.08.2003
(73) Proprietor: Yemas De Santa Teresa, S.A., 05001 Avila (ES)
(72) Inventor: BERASATEGUI, Martin, E-05001 Avila (ES)
(74) Representative: Elzaburu, Alberto de
(86) International application number: PCT/ES2001/000451
(87) International publication number: WO 2002/041710

(56) References cited:
- EP-A1- 0 377 312
- WO-A1-00/30473
- WO-A1-99/01042
- ES-A- 8 603 748

## Description

The present invention refers to a new mayonnaise sauce, produced on an industrial scale that as a distinctive and new character presents the following features: oily ingredient constituted in its highest percentage by extra virgin olive oil, flavor and texture like the best homemade mayonnaises, stability during prolonged periods of time, absence of additives, and being packaged in *Tetra Brik*. The invention also refers to a manufacturing and packaging process of said new mayonnaise.

### BACKGROUND OF THE INVENTION AND DISCUSSION OF THE STATE OF THE ART

Mayonnaise sauce is a very old culinary product on which historians do not agree on the etymology of its name or its origin. According to some, the name would be an alteration of "mahonesa", alluding to the Minorcan city of Mahón that was taken by the French on June 28, 1756. The Duke of Richelieu, in command of the French troops, was offered by his chef a sauce named "mahonesa" that he liked so much that he took it to France where the name was changed and it became famous. The Catalan writer, Josep Pla, among other authors, offers a slightly different version according to which the Duke of Richelieu, who wished to try Minorcan food, was offered an "ali-oli" (garlic and olive oil) sauce, made with olive oil and heavily spiced with garlic, which he did not like so the garlic was eliminated and mayonnaise was given its origin.

Others question the previous asseveration based on the fact that in Francés Roger's work, a Minorcan clergy, entitled "Art de la cuina" *(The Art of Cooking)* and subtitled "Libre de la cuina menorquina del segle XVIII" *(The Book of 18*^{*th*} *Century Minorcan Cuisine)*, no mention is made of any culinary product that resembles this sauce. The French have tried to document the product as typically French and thus there was an early 19^{th} century author who wrote that the word comes from the verb "manier" (manipulate). Others believe that it comes from the city of Maionne or Mayenne, which is certainly curious, given that in said city, contrary to on the island of Menorca, there has never been any olive oil. On this line, another French author, Prosper Montaigne, believes that the word "mayonnaise" comes from "moyeunaise", which in turn comes from Old French "moyeu", which meant egg yolk. What seems to be beyond any doubt is its purely Mediterranean character given the nature of its genuine ingredients: egg yolk, olive oil, salt and vinegar.

For more detail, refer to Nobel Prize winner Camilo José Cela's book entitled "Salsa mahonesa" *(Mayonnaise Sauce)* in "Los vasos comunicantes" (Ensayos, Verdades y Libertades) *(The Vessels in Communication (Essays, Truths and Liberties))*. Bruguera. Col. Narradores de Hoy (Narrators of Today), pages 45-55. 1^{st} Edition. Barcelona 1981.

According to a known text, mayonnaise sauce *"is an egg yolk and oil emulsion to which flavor is added with vinegar, lemon juice, mustard, salt, pepper... To make at home, the egg yolks must be constantly beat in the same direction, while the oil is incorporated first, drop by drop and then in a fine trickle to avoid the mix from clumping. Once well blended, the sauce is spiced with the rest of the ingredients. Nowadays, electric beaters and kitchen appliances permit making it quickly and without errors. The proportion is one glass of oil for each egg yolk, 2 or 3 spoonfuls of vinegar, mustard and salt to taste"* ("El Libro de las Técnicas de Cocina" *(The Book of Culinary Techniques)* by Maria Jesús Gil de Antuñano and others, page 256). El Pais/Aguilar, Madrid, 1997.

The inventor has carried out an exhaustive search in patent data bases to try to find an industrial mayonnaise having extra virgin olive oil as its principal oily ingredient and olive oil as its secondary oily ingredient and no registration has been found. Nonetheless, and for the purposes of illustrating the State of the Art, the following patents are referred to in whose title the word mayonnaise appears.

Spanish patent number 534830, filed on August 2, 1984 and granted on October 14, 1985, refers to a "Preparation process for light mayonnaise-type food products", in which together with three of the essential ingredients, others are used, particularly stabilizers, and in addition has the peculiarity of the product being presented as a foam, which is consequence of the air dispersion forming microbubbles. Accordingly, in the process object of this patent, extra virgin olive oil is not even used and, contrary to the product of the present invention, it uses stabilizers, and in addition, the product is presented as a foam.

European patent application published with number 0377312 filed on December 21, 1989, refers to "A low degree oil mayonnaise". In said product, the oil, which by no means is extra virgin olive oil, is at a ratio within the range of 65-72% by weight, the rest being corn syrup at a ratio of 4-15% by weight, egg yolk at a ratio of 4-8%, water at a ratio of 5-15% and an edible acid in a sufficient quantity to provide a 0.3%-0.5% acetic acid equivalent.

European patent 0477827, filed on September 23, 1991 and granted on August 9, 1995, has as its object "A low fat content mayonnaise product and the production method thereof". The ingredients constituting this mayonnaise are: edible oil at a ratio of less than 10% by weight, water, egg white, microcrystalline cellulose and polydextrose.

European patent 0546215, filed on December 12, 1991 and granted on April 1, 1998, refers to: "An oil-in-water type stable emulsion against heat and its preparation process". Said emulsion is constituted by 10-85% oil, 1-10% egg yolk, acetic acid, salt, water and 0.1-5 grams of soybean lysophosphatidylcholine for every 1000 grams of emulsion.

European patent number 0689773, filed on May 30, 1995 and granted on November 8, 2000, protects a "Low-fat mayonnaise with a glucono-delta-lactone based preservative". For said product whose pH is around 3.3-3.5, the characteristic aspect claimed is the stabilizer's nature and the use of acetic acid to obtain the claimed pH value.

European patent number 0758531, filed on August 2, 1996, protects "Low or non-fat mayonnaise compounds". The main feature of this product is the use of galacturonic acid methyl ester with amides or without amides substituting part or all of the fat (oil) of traditional mayonnaises.

European patent number 0855863, filed on September 18, 1996, refers to a Food sauce" containing 10-60% by weight of oil and water and egg proteins, milk, vegetables or fruits. Therefore it is about an emulsion product that clearly cannot be called mayonnaise in as much as its proteins do not exclusively come from the egg.

International patent application WO 9901042, filed on July 3, 1997, has as its object a "Mayonnaise pre-mix and its preparation process". It is a product that permits the consumer to prepare mayonnaise by simply adding the egg component (or only the yolk or the entire egg) with the consequent shaking of the resulting mix. Said pre-mix comprises as essential ingredients: vegetable oil, edible vinegar, an emulsifier (the egg yolk expressly excluded), condiments and spices. A product feature is that it is packaged in oxygen-free recipients.

International patent application WO 0030473, filed on November 24, 1999, is directed to a "Mayonnaise comprising olive oil and whey". Although this application uses olive oil, it does so together with whey as substitutes for other edible oils or water for the purpose of producing a light mayonnaise. The object of the whey is to provide amino acids and essential and non-essential proteins for the purpose of obtaining an improved nutritional value. On the other hand, the whey serves as a taste and acidity regulator for the mayonnaise.

### DETAILED DESCRIPTION OF THE INVENTION

Even though the traditional literature and more recently Internet have plenty of references on mayonnaise preparation recipes based on extra virgin olive oil, the reality is that the few attempts for this sauce's industrial manufacturing have ended in failure.

We can find the cause of these failures in the use of inappropriate oils, manufacturing practices that could be sufficient for other types of mayonnaise that in this case do not permit obtaining emulsions or provide emulsions that are not able to exceed several days as such. Likewise, the recipes that habitually appear in the literature are perfect for manufacturing mayonnaise for immediate consumption, the generally obtained pH values are normally within the range of or greater than 4.50, values that in addition to not complying with Sanitary Technical Regulations (STR) for Mayonnaise Sauce, permit the growth of a series of pathogenic microorganisms that would make the product harmful from a sanitary point of view.

The present invention implies a surprising technical advance in as much as for the first time it permits, according to the inventor's and applying firm's loyal knowing and understanding, obtaining an industrial mayonnaise containing extra virgin olive oil as its principal oily ingredient and olive oil as its secondary oily ingredient, a flavor and texture like those of the best homemade mayonnaises, stability during prolonged periods of time, it is additive free, and is marketed and conserved in a Tetra Brik package at a maximum temperature of 12°C, in which conditions it has a six months' shelf-life. These features convert it into an exceptional gastronomic product.

It is indubitable that mayonnaise is a food product that has the fame of being harmful as the news events in the media demonstrate it, that at times have become aware of Salmonella intoxications as a consequence of the ingestion of mayonnaise in poor conditions at large banquets. This is due to several factors that if simultaneously present multiply the severity of the intoxications:
(1) Use of raw egg (the egg itself is a source of great microbe contamination, with enterobacteria, molds, fungi, staphylococci, etc. normally present in a microbiological analysis of the egg);
(2) Incorrect handling practices such as not storing mayonnaise in the refrigerator once manufactured and
(3) Obtaining sauces with pH values of 4.5 or greater.

It is documented in the literature that pH values that are around 4.5 permit the growth of a series of harmful bacteria (among them Salmonella). Even though all industrial mayonnaises comply with this condition (maximum pH of 4.2, according to the STR), the problems are generated with mayonnaises prepared in homes, restaurants and hotel establishments. Attempts have been made by the Health Authorities for said places to control their productions, obliging them (in Andalusia, for example, by means of the Board of Andalusia's Health and Social Services Council Mandate of June 8, 1999) to prepare homemade mayonnaises with maximum pH values of 4.2. As it may be assumed, compliance with this requirement on the part of restaurant owners is not as rigorous as would be desired. Because of these accidents, people involved in the hotel industry frequently refer to mayonnaise as "a product persecuted by the Health Authorities with competence in the matter" (Ministry of Health and Consumption or Health Councils in the case of the Autonomous Communities with transferred competences). To avoid this, they have resorted to:
(1) pH control measures such as those previously mentioned;
(2) Use of pasteurized egg and
(3) Eliminating the preparation of homemade mayonnaise in restaurant kitchens and many homes and substituting it with industrial mayonnaises from seed oils (fundamentally soybean and sunflower). It is here where the Spanish gastronomy begins to win in food safety (information of industrial mayonnaise poisoning really does not exist), but it loses all the exquisiteness of the traditional sauce prepared with extra virgin olive oil.

Among the novelties provided by the present invention it is possible to point out the following:
a) the selection of an extra virgin olive oil with a determined maximum acidity,
b) emulsion temperatures,
c) egg yolk incorporation temperature,
d) incorporation times,
e) emulsion rates and
f) packaging in a system such as Tetra Brik that keeps the product isolated from light and air, avoiding the occurrence of oxidation and microbe growth phenomenon that are in need of these elements, that could shorten the product's shelf-life.

The constituent ingredients of the new mayonnaise object of the invention are:
A) 40% to 80% by weight/total weight of extra virgin olive oil.
B) 20% to 40% by weight/total weight of olive oil which is a mixture of extra virgin olive oil and refined olive oil.
C) 10% to 20% by weight/total weight of egg yolk.
D) 2% to 5% by weight/total weight of cider vinegar.
E) 0.5% to 2% by weight/total weight of lemon juice.
F) 0.5% to 1.5% by weight/total weight of salt.

The nature of the above-mentioned ingredients is described in detail next.
A) **EXTRA VIRGIN OLIVE OIL.** Its presence in the industrial mayonnaise object of the present invention is one of the singular aspects thereof.
Extra virgin olive oil is a particular type of virgin olive oil which, according to the definition of the International Olive Oil Council (IOOC), the Food Code (of the World Health Organization) and the European Union (EU) Regulations, is *"that obtained from the fruit of the olive tree only by mechanical means or other physical means, particularly in thermal conditions that do not lead to alterations in the oil, and that has not experienced any treatment other than washing, decanting, centrifuging and filtering"*. This oil has a color ranging from green and greenish-yellow to golden. Its free acidity expressed as free oleic acid content must not exceed 3.3%.
Extra virgin olive oil is defined as virgin olive oil whose acidity does not exceed 1% and possesses, among others, impeccable organoleptic features, reaching a minimum score of 6.5 on a panel test.
Due to the variety of olives and the features of the different climates and soils of the different areas where the olive tree is cultivated, not all extra virgin olive oils present the same properties, even responding to the previously mentioned requirements. Next, only as an example, the features provided are those of an extra virgin olive oil manufactured by the ArteOliva company from Palma del Río (Córdoba) proceeding from a selection of "arbequina", "hojiblanca", "picual" and "picuda" olive varieties; features to point out being: color, aroma and maximum acidity of 0.5%.

| Organoleptic Profile: | |
|---|---|
| Fruit Aroma | > 2 |
| Bitterness | < 2 |
| Pungent Taste | < 2 |
| Defects. | 0 |

| **PHYSICOCHEMICAL FEATURES.** -Green and greenish-yellow to golden liquid, transparent with characteristic odor, practically insoluble in alcohol and miscible with petroleum ether. | |
|---|---|
| Relative density (20°C) | 0.910 - 0.916 |
| Acidity (% m/m as oleic acid) | 0.5 maximum |
| Peroxides Index (meq/O ₂ /kg oil) | 20.0 maximum |
| Unsaponifiable material (% m/m) | 1.5 maximum |
| K270 | 0.20 maximum |
| DK | 0.01 maximum |
| Carotenes index | 55-65 |
| Chlorophyll index | 30-40 |

| Fatty acids profile (% m/m as methyl esters) | |
|---|---|
| Myristic | 0.05 maximum |
| Palmitic | 7.5 - 20.0 |
| Palmitoleic | 3.5 maximum |
| Stearic | 0.5 - 5.0 |
| Oleic | 62.0 - 83.0 |
| Linoleic | 3.5 - 20.0 |
| Linolenic | 0.9 maximum |
| Arachic | 0.6 maximum |
| Gadoleic | 0.4 maximum |
| Behenic | 0.2 maximum |
| Lignoceric | 0.1 maximum |

| Composition in sterols (% m/m) | |
|---|---|
| Beta-sitosterol | 93.0 minimum |
| Cholesterol | 0.5 maximum |
| D7-Stigmasterol | 0.5 maximum |
| Campesterol | 4.0 maximum |
| Stigmasterol | Less than campesterol |
| Brassicasterol | 0.1 maximum |
| Stigmasta-1,3-diene (ppm) | 0.15 maximum |
| Waxes (ppm) | 250 maximum |
| Erythrodiol + Uvaol (%) | 4.5 maximum |

| **MICROBIOLOGICAL FEATURES** | |
|---|---|
| Mesophyll Aerobe Microorganisms Count | Absence in 1 g |
| Molds and Yeasts Count | Absence in 1 g |
| Enterobacteria Count | Absence in 1 g |
| Applicable Standard.- ArteOliva extra virgin olive oil complies with that established for extra virgin olive oil by the Spanish Sanitary Technical Regulation, European Union Regulation, R.CEE 2568/91 and subsequent modifications, Codex Alimentarious and International Olive Oil Council recommendations and is therefore apt for human consumption. | |

It is imperative at this point to clarify that olive oils (virgin or refined) are distinguished from seed oils in both their obtainment (no chemical dissolvent is used) and in their fatty acids composition. Olive oil is rich in oleic acid (62-83) in comparison with sunflower or soybean oils which have linoleic acid as their principal component. Olive oil possesses, among others, an important cardio-protecting activity, concretely, a diet based on this oil helps to:
(1) decrease harmful cholesterol, that is to say the cholesterol associated with low density lipoproteins (LDL-C);
(2) decrease blood triglyceride levels;
(3) decrease the atherogenesis index and
(4) increase beneficial cholesterol, that is to say the cholesterol associated with high density lipoproteins (HDL-C).
On the other hand, the effect of seed oils is limited to decreasing harmful cholesterol.
If we begin with the difference between virgin olive oil and the other oils, we should say that in the case of the former, no refining process exists, while all other oils go through deacidification, discoloration and deodorization processes. It is very important to mention the nutritional importance of two of the natural component families present in virgin olive oil: tocopherols and polyphenols. Different studies have demonstrated an important role of antioxidants in cellular stress reactions, being demonstrated the relationship between a diet rich in extra virgin olive oil (with elevated levels of these two antioxidant families) and the rat's organism's resistance to aging and cellular death.
B) **OLIVE OIL.**- This is the oil obtained by means of mixing extra virgin olive oil and refined olive oil. Next, the features provided are those of an olive oil by the ArteOliva company apt for use as ingredient B) in the mayonnaise of the present invention.
Organoleptic Profile.- Slightly fruity, soft and pleasing to the palate.

| **PHYSICOCHEMICAL FEATURES.** -Pale yellow to greenish-yellow liquid, transparent with characteristic odor, practically insoluble in alcohol and miscible with petroleum ether. | |
|---|---|
| Relative density (20°C) | 0.910 - 0.916 |
| Acidity (% m/m as oleic acid) | 0.4 maximum |
| Peroxides Index (meq/O ₂ /kg oil) | 15.0 maximum |
| Unsaponifiable material (% m/m) | 1.5 maximum |
| K270 | 1.00 maximum |
| DK | 0.13 maximum |
| Carotenes index | 15 - 25 |
| Chlorophyll index | 10 - 20 |

| Fatty acids profile (% m/m as methyl esters) | |
|---|---|
| Myristic | 0.05 maximum |
| Palmitic | 7.5 - 20.0 |
| Palmitoleic | 3.5 maximum |
| Stearic | 0.5 - 5.0 |
| Oleic | 62.0 - 83.0 |
| Linoleic | 3.5 - 20.0 |
| Linolenic | 0.9 maximum |
| Arachic | 0.6 maximum |
| Gadoleic | 0.4 maximum |
| Behenic | 0.2 maximum |
| Lignoceric | 0.1 maximum |

| Composition in sterols (% m/m) | |
|---|---|
| Beta-sitosterol | 93.0 minimum |
| Cholesterol | 0.5 maximum |
| D7-Stigmasterol | 0.5 maximum |
| Campesterol | 4.0 maximum |
| Stigmasterol | Less than campesterol |
| Brasicasterol | 0.1 maximum |
| Stigmasta-1,3-diene (ppm) | 50 maximum |
| Waxes (ppm) | 350 maximum |
| Erythrodiol + Uvaol (%) | 4.5 maximum |

| **MICROBIOLOGICAL FEATURES** | |
|---|---|
| Mesophyll Aerobe Microorganisms Count | Absence in 1 g |
| Molds and Yeasts Count | Absence in 1 g |
| Enterobacteria Count | Absence in 1 g |
| **Applicable Standard** .- ArteOliva olive oil complies with that established for olive oil by the Spanish Health Technical Regulation, European Union Regulation, R.CEE 2568/91 and subsequent modifications, Codex Alimentarious and International Olive Oil Council recommendations and is therefore apt for human consumption. | |

C) **EGG YOLK:** An industrial, ultra-pasteurized liquid egg yolk totally additive free and other non-egg yolk ingredients is used. As an example, the specifications provided are those of an egg yolk available on the market for industrial scale use.
**Manufacturer**.- Pascual de Aranda S.A.
**Manufacturer code**.- LD-028
**Product denomination**.- Ultrapasteurized liquid yolk
**Other ingredients and additives.-** None
**Organoleptic features.-** Presents the characteristic color, odor, and flavor of a recently beat egg yolk.

| **Physicochemical features.-** | |
|---|---|
| Total solids | minimum 40° Brix at 20°C |
| Fat | > 27% |
| Proteins | > 15% |
| 3-OH-Butyric acid | < 10 mg/kg |
| Lactic acid | < 1 mg/kg |
| Succinic acid | < 25 mg/kg |
| Indicative density | 1028 g/l (20°C, 45° Brix) |
| (The density increases approximately 1 g/l upon decreasing the temperature 10°C) | |
| pH | 6.25-6.95 |

D) **CIDER VINEGAR (APPLE)**.- In this ingredient, it is important to specially point out its acetic acidity, color index, flavor and odor. As an example, the features provided are those of a commercial product manufactured by the Envasados Eva S.A. company from Lecumberri (Navarre).

| **CHEMICAL FEATURES** | |
|---|---|
| Acidity | 5° |
| Ashes | > 1g/l |
| Color index | 0.09 ± 0.02 |
| Methanol | < 1000 mg/ml |
| Sugarless dry extract | > 10 g/l |

| **Microbiological features** | |
|---|---|
| Biologically stabilized by pasteurization | |

| **Organoleptic features** | |
|---|---|
| The color, aspect, texture, odor and flavor are characteristic, without strange or unpleasant odors or flavors. | |

E) **LEMON JUICE.-** Natural lemon juice is used. It is a slightly cloudy, yellowish liquid having a strong acidic flavor and pleasant odor. It contains 6.7-8.6% citric acid, the rest being sugar, gum and trace quantities of potassium carbonate.
F) **SALT.-** Refined table salt is used. As an example, the features provided are those of the market brand Disal® table and kitchen salt whose features are the following:

| | |
|---|---|
| Refined salt | 100% |
| Iodine (as KI) | 60 mg/kg |
| Anti-binding agent 536 | 10 mg/kg |

### Description of the nature of the Tetra Brik packaging material

An important aspect of the invention as has been previously indicated is constituted by the mayonnaise product packaging in a Tetra Brik package. For the purpose of illustrating the nature of the package material, having its importance in achieving air-proof, impermeable to both liquids and gases, opaqueness, impact resistant and economy properties, the features provided next are those of a material of this type of layered structure (manufactured by the Tetra Pak company), the structure of the layers being arranged in the manner represented in the following outline:

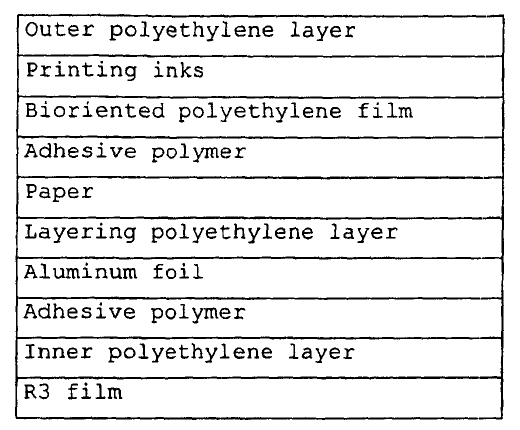

### Manufacturing process for the mayonnaise object of the invention

The manufacturing process for the mayonnaise object of the present invention comprises the following operations:
(1) separately, simultaneously or sequentially preparing in any order: (i) an acidic mush consisting of vinegar cider, lemon juice and salt; and (ii) egg yolk + oily phase emulsion;
(2) mixing the acidic mush (i) with the emulsion (ii) with stirring until obtaining a homogenous dispersion, and
(3) packaging the resulting mayonnaise in Tetra Brik packages by means of an automatic packaging system.

Operation (1) is carried out by mixing the three ingredients with stirring while they are heated to a temperature in the range of 70 to 90°C for 1-4 minutes, its cooling is immediately performed by means of a tubular exchanger and the mix is finally brought to a temperature lower than 23°C.

To carry out operation (2), it is convenient to remove the egg yolk from the refrigerator an hour before being used in manufacturing the mayonnaise. After said time has elapsed, said yolk is introduced into the emulsion system recipient, preferably KORUMA, where it is brought to a temperature between 18 and 23°C. Next, and in vacuum conditions between -0.4 and -0.5 atmospheres that will be maintained during the entire process, the Extra Virain Olive Oil is introduced at an initial mass flow rate of 20-25 kg/minute, while the emulsion system mixing device functions at a rotational speed comprised between 2800-3100 rpm and the emulsion temperature being maintained at a value lower than 23°C. After introducing the Extra Virgin Olive Oil, the rest of the oily phase is incorporated using a mass flow rate of 50-60 kg/minute, 30-50 seconds later the corresponding quantity of acidic mush is added at a mass flow rate of 40-60 kg/minute. Once the component incorporation is finished, the emulsion process continues at 2800-3100 rpm for a period of 1-3 minutes.

After checking that the product pH is in the range of 4.00 to 4.10, the batch is ready to be subjected to the packaging operation (3) that is carried out in an automatic packaging facility, such as the Tetra Pak filler, forming the packages from a coil of flat material, and at the same time performing the package formation functions, package sterilization and package filling.

It is necessary to point out that in this process, the packaging operation forms part of the manufacturing process, in as much as the packaging is the final operation, given that for the product features and the necessities of protecting it with the specific, constituent package material, said packaging operation cannot be delayed after mixing and homogenizing the acidic mush and egg yolk + oily phase emulsion.

For our product, a high quality package material described in Annex V has been selected. The material's composition adapts to the product's requirements, it being protected in an excellent manner and maintaining its quality up to the moment it is to be consumed.

The Tetra Brik Aseptic system is based on the principle of sealing the packages below the level of the liquid, therefore obtaining totally opaque packages and completely filled, therefore free of air. Perhaps this is one of our product's greatest innovations since the high degree of damage that air and light provoke in fatty products is known (in our case we are talking about 80% fatty material in the finished product).

A PLC (Panel Light Control) system controls the machine's functions. The system works quickly and precisely and is extremely reliable. Through the control panel's signaling lamps, the machine operator receives information about measures that must be taken.

The package material is delivered in standard or large coils. The machine is provided with automatic joint equipment, meaning that a package material coil can automatically be joined to the previous one without the machine operator needing to initiate this operation. The joined package is automatically separated by the machine.

The package material goes through a 35% hydrogen peroxide bath heated to 72°C, which is eliminated immediately after with rollers. The strip of material then passes through nozzles that project sterile air. The possible remains of hydrogen peroxide are eliminated in this operation. The package material immediately acquires a tubular shape. The tube sterilization and formation takes place in a part of the machine that is completely closed, preventing the recontamination of the material.

The machine has an advanced pattern matching system. Photoelectric cells detect the position of the strip of material and send information to the pattern matching system, which when necessary corrects the strip of material in the course of production.

In the definitive package formation, it is very important for the upper and lower ribs to be well sealed. The sealing time proves to be long enough thanks to the fact that the definitive formation takes place on two tracks. The machine can maintain a high speed and at the same time provide an adequate treatment to each particular package.

The aseptic treatment time for the package material is, thanks to the intense, sufficiently long sterilization bath, which confers the process with great reliability.

The machines are provided with non-sterile package expulsion systems in the case that a stop occurs, they also have mechanisms to eliminate low-weight Briks.

After packaging, the packages are incased and subsequently palletized and stored.

With the object of preserving the emulsion stability, the product storage and distribution must be carried out at temperatures between 10 and 12°C.

### EXAMPLE 1

A batch of the industrial mayonnaise object of the invention was manufactured using a KORUMA brand batch emulsion system that processes 600 kg batches of mayonnaise sauce.

First an acidic mush was prepared consisting of a mix of cider vinegar, lemon juice and salt. This mix was heated with stirring up to a temperature of 85°C for 2 minutes, its cooling was immediately carried out by means of a tubular exchanger, and the mix was finally brought to a temperature lower than 23°C.

The egg yolk was removed from the refrigerator where it was being conserved and was kept out before being used during the time necessary to reach approximately 15°C. After said time elapsed, it was introduced into the emulsion system where it was brought to a temperature of between 18 and 23°C. Next, and in vacuum conditions between -0.4 and -0.5 atmospheres that were maintained during the entire process, 150 kg of Extra Virgin Olive Oil were introduced into the system at an initial mass flow rate of 20-25 kg/minute. The emulsion system stirrer was adjusted to a rotational speed comprised between 2800-3100 rpm and the emulsion temperature was maintained at a value lower than 23°C which was achieved by means of the refrigerating casing of said system through which water circulated at a temperature lower than 15°C.

After having introduced 150 kg of Extra Virgin Olive Oil, the incorporation of the rest of the oily phase (the component previously denominated B) was carried out, using a mass flow rate of 50-60 kg/minute, and 30-50 seconds later the corresponding quantity of the acidic mush was added at a mass rate of incorporation of 40-60 kg/minute.

Once the component incorporation finished, the emulsion process was continued at 2800-3100 rpm during a period of 1-3 minutes.

After checking that the product pH is in the range of 4.00 to 4.10, the finished mayonnaise batch was sent to a Tetra Pak TBA 19 filler which performed the package formation functions, package sterilization and package filling. The high quality package material was that previously described, the material composition is adapted to the product requirements in such a way that it is protected in an excellent manner and maintains its quality up to the moment it is to be consumed providing it is maintained at a temperature of 10 to 12°C.

### EXAMPLE 2

For the purpose of objectively and independently evaluating the quality of the mayonnaise object of the invention, a blind study was carried out in which a panel of 10 tasters compared the mayonnaise of the invention with two commercial mayonnaises (mayonnaises that, in addition to their composition and preparation process, differed from that of the invention in that they are packaged in glass), and with a homemade mayonnaise whose composition was similar to that of the invention.

The commercial mayonnaises were respectively denominated I and II, the homemade mayonnaise III and the mayonnaise of the invention IV.

The oil and pH of the four mayonnaises were the following:

| Type of oil | I | II | III | IV |
|---|---|---|---|---|
| Sunflower | X | - | - | - |
| Soybean | - | X | - | - |
| Extra Virgin Olive Oil and Olive Oil | - | - | X | X |
| pH value | 3.87 | 4.05 | 4.55 | 4.07 |

After preparing the homemade mayonnaise, a quantity of 250 ml was transferred with a spoon to a plate situated in front of a label denominated III. The next was to extract respective quantities of 250 ml from the mayonnaise I and II glass jars and the mayonnaise IV from the Tetra Brik packages, being deposited on plates marked respectively I, II and IV, so that the study participants did not know the constitution of each mayonnaise.

After tasting the four samples, the evaluation results were the following:

Seven thought that the mildest and most tasteful was IV while three gave said assessment to III. The ten participants classified mayonnaises I and II as the least flavorful or the worst tasting.

## Claims

1. Ari additive-free industrial mayonnaise with flavour and texture resembling homemade mayonnaise with stability during prolonged periods of time, **characterized, by** being packaged in light and air proof packages, particularly in Tetra Brik package, and by having a composition comprising:
A) 40% to 80% by weight/weight of extra virgin olive oil.
B) 20% to 40% by weight/weight of olive oil which is a mixture of extra virgin olive oil and refined olive oil.
C) 10% to 20% by weight/weight of egg yolk.
D) 2% to 5% by weight/weight of cider vinegar.
E) 0.5% to 2% by weight/weight of lemon juice.
F) 0.5% to 1.5% by weight/weight of salt.

2. An industrial mayonnaise according to claim 1 whose pH value is in the range of 4.00 to 4.10.

3. An process for manufacturing the industrial mayonnaise of preceding claims 1 and 2, comprising the following operations:
(1) separately, simultaneously or sequentially preparing, in any order: (i) an acidic mush comprising 2% to 5% w/w of cider vinegar, 0,5% to 2% w/w of lemon juice and 0,5% to 1,5% w/w of salt; and (ii) an oily phase emulsion comprising 10% to 20% w/w of egg yolk, 40% to 60% w/w of extra virgin olive oil and 20% to 40% w/w of olive oil which is obtained by mixing extra virgin olive oil and refined olive oil;
(2) mixing the acidic mush (i) with the emulsion (ii) with stirring until obtaining a homogenous dispersion, and
(3) packaging the resulting mayonnaise in light and air proof packages, particularly in Tetra Brik packages by means of an automatic packaging system.

4. Process according to claim 3, **characterized in that** the acidic mush (i) is incorporated into the emulsion (ii) at a temperature lower than 23°C.

5. Process according to any of the claims 3 and 4, **characterized in that** for preparing the emulsion (ii), the egg yolk is removed from the refrigerator where it is conserved and before being used is kept out until reaching a temperature of 15°C.

6. Process according to any one of claims 3 to 5, **characterized in that** step (2) is carried out at a maximum temperature of 23°C and in a -0.4 to -0.5 atmospheres vacuum.

## Patentansprüche

1. Zusatzstoff-freie industrielle Mayonnaise, die in Geschmack und Beschaffenheit einer hausgemachten Mayonnaise entspricht, die über längere Zeiträume haltbar ist, **dadurch gekennzeichnet, dass** sie in licht- und luftdichten Verpackungen abgepackt ist, insbesondere in Tetra Brik-Packungen, und eine Zusammensetzung aufweist, die umfasst:
A) 40% bis 80% Gewicht/Gewicht extra-virgines Olivenöl,
B) 20% bis 40% Gewicht/Gewicht Olivenöl, das eine Mischung aus extra-virginem Olivenöl und raffiniertem Olivenöl ist,
C) 10% bis 20% Gewicht/Gewicht Eigelb,
D) 2% bis 5% Gewicht/Gewicht Apfelessig,
E) 0,5% bis 2% Gewicht/Gewicht Zitronensaft,
F) 0,5% bis 1,5% Gewicht/Gewicht Salz.

2. Industrielle Mayonnaise nach Anspruch 1, deren pH-Wert in einem Bereich von 4,00 bis 4,10 liegt.

3. Verfahren zur Herstellung der industriellen Mayonnaise nach einem der vorhergehenden Ansprüche 1 und 2, umfassend die folgenden Schritte:
(1) getrennte, gleichzeitige oder sequenzielle Herstellung, in jeder beliebigen Reihenfolge, von: (i) einem säurehaltigen Brei, umfassend 2% bis 5% Gew./Gew. Apfelessig, 0,5% bis 2% Gew./Gew. Zitronensaft und 0,5% bis 1,5% Gew./Gew. Salz; und (ii) einer Ölphasen-Emulsion, umfassend 10% bis 20% Gew./Gew. Eigelb, 40% bis 80% Gew./Gew. extra-virgines Olivenöl und 20% bis 40% Gew./Gew. Olivenöl, das durch Vermischen von extra-virginem Olivenöl mit raffiniertem Olivenöl erhalten wird;
(2) Mischen des säurehaltigen Breis (i) mit der Emulsion (ii) unter Rühren, bis eine homogene Dispersion erhalten wird; und
(3) Verpacken der erhaltenen Mayonnaise in licht- und luftdichten Packungen, insbesondere in Tetra Brik-Packungen mittels eines automatischen Verpackungssystems.

4. Verfahren nach Anspruch 3, **dadurch gekennzeichnet, dass** der säurehaltige Brei (i) bei einer Temperatur von unter 23°C in die Emulsion (ii) eingearbeitet wird.

5. Verfahren nach einem der Ansprüche 3 und 4, **dadurch gekennzeichnet, dass** für die Herstellung der Emulsion (ii) das Eigelb aus dem Kühlschrank, in dem es aufbewahrt wird, genommen wird und vor der Verwendung draußen aufbewahrt wird, bis es eine Temperatur von 15°C erreicht hat.

6. Verfahren nach einem der Ansprüche 3 bis 5, **dadurch gekennzeichnet, dass** Schritt (2) bei einer maximalen Temperatur von 23°C und in einem Vakuum von - 0,4 bis -0,5 Atmosphären durchgeführt wird.

## Revendications

1. Mayonnaise industrielle sans additif avec un arôme et une texture ressemblant à la mayonnaise maison avec une stabilité lors de périodes prolongées, **caractérisée par** un conditionnement dans des emballages à l'abri de la lumière et de l'air, en particulier dans des emballages Tetra Brik, et ayant une composition comprenant :
A) de 40 % à 80 % poids/poids d'huile d'olive extra vierge.
B) de 20 % à 40 % poids/poids d'huile d'olive qui est un mélange d'huile d'olive extra vierge et d'huile d'olive raffinée.
C) de 10 % à 20 % poids/poids de jaune d'oeuf.
D) de 2 % à 5 % poids/poids de vinaigre de cidre.
E) de 0,5 % à 2 % poids/poids de jus de citron.
F) de 0,5 % à 1,5 % poids/poids de sel.

2. Mayonnaise industrielle selon la revendication 1, dont la valeur du pH se situe dans la plage de 4,00 à 4,10.

3. Procédé pour fabriquer la mayonnaise industrielle des revendications 1 et 2 précédentes, comprenant les opérations suivantes :
(1) de façon séparée, simultanée ou successive, préparer, dans un ordre quelconque : (i) une bouillie acide comprenant de 2 % à 5 % poids/poids de vinaigre de cidre, de 0,5 % à 2 % poids/poids de jus de citron et de 0,5 % à 1,5 % poids/poids de sel ; et (ii) une émulsion à phase huileuse comprenant de 10 % à 20 % poids/poids de jaune d'oeuf, de 40 % à 80 % poids/poids d'huile d'olive extra vierge et de 20 % à 40 % poids/poids d'une huile d'olive qui est obtenue en mélangeant de l'huile d'olive extra vierge et de l'huile d'olive raffinée ;
(2) mélanger la bouillie acide (i) avec l'émulsion (ii) en remuant jusqu'à obtention d'une dispersion homogène, et
(3) conditionner la mayonnaise résultante dans des emballages à l'épreuve de la lumière et de l'air, en particulier dans des emballages Tetra Brik au moyen d'un système de conditionnement automatique.

4. Procédé selon la revendication 3, **caractérisé en ce que** la bouillie acide (i) est incorporée dans l'émulsion (ii) à une température inférieure à 23°C.

5. Procédé selon l'une quelconque des revendications 3 et 4, **caractérisé en ce que**, pour préparer l'émulsion (ii), le jaune d'oeuf est retiré du réfrigérateur où il est conservé et, avant d'être utilisé, est maintenu à l'extérieur jusqu'à ce qu'il atteigne une température de 15°C.

6. Procédé selon l'une quelconque des revendications 3 à 5, **caractérisé en ce que** l'étape (2) est réalisée à une température maximale de 23°C et dans un vide de -0,4 à -0,5 atmosphère.
